# EUROPEAN PATENT APPLICATION

(11) **EP 4 600 878 A1**
(43) Date of publication of application: **13.08.2025**
(21) Application number: 24156578.7
(22) Date of filing: 08.02.2024
(51) Int. Cl.: G06Q 10/08, G06Q 10/0833, G06Q 50/40, G07C 5/00

(54) **A VEHICLE LOADING EVENT CONFIRMATION SYSTEM AND A COMPUTER-IMPLEMENTED METHOD**

(71) Applicant: VOLVO TRUCK CORPORATION, 405 08 Göteborg (SE)
(72) Inventor: PERRAUD, Nicolas, 69740 GENAS (FR); QUIBRIAC, Yann, 69007 Lyon (FR)
(74) Representative: Zacco Sweden AB

(57) **Abstract**

A vehicle loading event confirmation system comprising processing circuitry configured to:
- determine that a vehicle has come to a standstill,
- receive, from a camera associated with the vehicle, a captured image of an identification code, wherein the identification code is associated with a predefined loading event at which the vehicle is planned to become loaded or unloaded,
- receive, from a sensor of the vehicle, event data indicative of an actual change in weight carried or pulled by the vehicle at the loading event,
- transmit said identification code and vehicle data including said event data to an off-board server located remotely from the vehicle so as to allow the off-board server to provide information which enables a requester to determine whether or not the actual change in weight matches the expected change in weight.

## Description

### TECHNICAL FIELD

The disclosure relates generally to a confirmation system. In particular aspects, the disclosure relates to a vehicle loading event confirmation system and to a computer-implemented method. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicles, such as heavy-duty vehicles, are frequently used for delivering goods, objects, materials etc. For instance, when a vehicle is being loaded or unloaded, there is often paperwork involved followed by an extra action to go back to the office to input the delivery in a computer system for future reference. The dispatcher needs to make sure that all that was intended to be loaded or unloaded has indeed been properly executed at the right place. Attempts have been done to digitalize the actual confirmation of such loading or unloading in order to reduce the paperwork and the additional extra actions following such paper work. For instance, a driver of a delivery truck may need to have multiple different apps, one for each supplier, installed on his/her mobile phone for confirming that a delivery or a pick-up has been made. Nevertheless, even with such apps, the driver still needs to make sure that the correct deliver or puck-up has been actually made. Thus, there is still room for improvement when it comes to providing a simple and effective confirmation of such events.

### SUMMARY

According to a first aspect of the disclosure, there is provided a vehicle loading event confirmation system comprising processing circuitry configured to:
- determine that a vehicle has come to a standstill,
- receive, from a camera associated with the vehicle, a captured image of an identification code, the identification code being external to the vehicle, wherein the identification code is associated with a predefined loading event at which the vehicle is planned to become loaded or unloaded, wherein successful completion of the predefined loading event is associated with an expected change in weight carried or pulled by the vehicle,
- receive, from a sensor of the vehicle, event data indicative of an actual change in weight carried or pulled by the vehicle at the loading event,
wherein, upon determination that the vehicle is at a standstill and upon receipt of the captured image and the event data, the processing circuitry is further configured to:
- transmit said identification code and vehicle data including said event data to an off-board server located remotely from the vehicle so as to allow the off-board server to provide information which enables a requester to determine whether or not the actual change in weight matches the expected change in weight. The first aspect of the disclosure may seek to facilitate the confirmation of a loading event having taken place. Such a loading event may include loading or unloading of goods, objects, materials, etc. A technical benefit may include that by associating a loading event (such as loading or unloading of goods) with an identification code and with event data indicative of a change in weight, which information is then provided to the server, a simple confirmation can be enabled. A requester (e.g. a third party in the form of a supplier) can simply access the information provided to the server to get the delivery confirmed. In particular, the requester may check that the change in weight corresponds to the expected change in weight, i.e. that all goods have been delivered at the specific loading event. Similarly, a requester may check that all goods that were expected to be picked-up at a site have been done so. A further benefit is that the amount of work required by the driver is also reduced, as no paperwork is required, and no specific app is required for each supplier. Each loading event (i.e. each delivery and each pick-up) may be associated with its own identification code. For example, a vehicle may perform several different loading events (e.g. at different sites) before it has become completely unloaded. Determining that the vehicle has indeed come to a standstill provides an additional level of security that the loading event may be initiated, thus e.g. avoiding that the image of the identification code has been captured by mistake while the vehicle is driving.

Optionally in some examples, including in at least one preferred example, the camera may be a vehicle mounted camera. A technical benefit may include that existing cameras on the vehicle may be used, rather than including other external cameras. For instance, a vehicle may be driven by a plurality of different drivers at different occasions. Rather than providing each driver with a separate device having the required camera functionality and connectivity to the processing circuitry, it is convenient to have locally mounted camera on the vehicle. Nevertheless, in other examples, it is inconceivable to use other cameras. For instance, the camera may be an infrastructure camera, such as a camera mounted at a gate, a loading dock, etc., or it may be included in a nomadic device such as a mobile phone, or it may even be a camera mounted on another vehicle (which may be advantageous if for example the loading event involves moving goods from one vehicle to another).

Optionally in some examples, including in at least one preferred example, the vehicle loading event confirmation system may further comprise said camera, wherein the camera may have:
- a normal operating mode, in which it provides video representation of the environment, and
- a code reading mode, in which it is enabled to capture said image of an identification code, wherein, upon determination by the processing circuitry that the vehicle has come to a standstill, the processing circuitry is configured to control the camera to switch from the normal operating mode to the code reading mode. A technical benefit may include that a vehicle camera may operate normally during driving, whereas it may be of more use as a code reading camera when the vehicle has stopped for a loading event. For instance, a vehicle, such as a heavy-duty vehicle (e.g. a truck), may have two or more cameras. For example, the vehicle may have a camera at the right front corner of the vehicle and another camera at the left front corner of the vehicle. At least one of those (suitably the one on the driver's side) may be switchable between said normal operating mode and said code reading mode.

Optionally in some examples, including in at least one preferred example, said identification code may be a QR code or a bar code. A technical benefit may include that a QR code or a bar code may provide enhanced security as they may include encryption and security features, adding an extra layer of protection to the encoded data. However, in other examples, the identification code could be a series of numbers, letters, and/or other characters/symbols.

Optionally in some examples, including in at least one preferred example, said sensor may be a load sensor and wherein said event data may include:
- a first load value sensed by the load sensor before the loading event is initiated, and
- a second load value representative of the load exerted on the vehicle at a time of determining by the processing circuitry that the loading event has been completed,
wherein said actual change in weight is determined from the difference between the first load value and the second load value. A technical benefit may include that many heavy-duty vehicles are already fitted with load sensors, and that using the input from one or more of such load sensors allows a change in weight carried by the vehicle to be tracked. For example, if a certain loading event involves unloading goods having a known weight, then it may be expected that when the loading event is completed the change in weight as detected by the load sensor(s) should substantially correspond to said known weight. The event data which may thus include the detected change in weight is made accessible via the off-board server. A requester, for example the supplier having employed a delivery firm, can then request information from the off-board server, and can compare the detected actual change in weight with the expected (known) weight. Hereby, the supplier can confirm that the goods have been correctly delivered with respect to the particular loading event.

Optionally in some examples, including in at least one preferred example, said sensor may be a trailer sensor configured to sense whether or not a trailer is connected to the vehicle, wherein said event data may include information indicative of the trailer having become disconnected from the vehicle and thus indicative of an actual change in weight pulled by the vehicle. A technical benefit may include that sometimes a loading event may involve delivering and disconnecting a trailer from a truck pulling the trailer, and that this may then be detected by using a trailer sensor. Thus, the action of disconnecting the vehicle represents a reduction of pulled weight by the truck, namely the weight of the trailer. Thus, in case the loading event includes disconnecting an entire trailer from a pulling truck the input from the trailer sensor that the trailer has been disconnected can be translated into the change in weight pulled by the truck has been reduced by the trailer weight, which will also correspond to the expected change for the loading event.

Optionally in some examples, including in at least one preferred example, said camera may be a first camera, wherein said sensor may form part of a second camera, wherein said event data may include information indicative of objects carried by the vehicle having disappeared from the second camera's field of view and thus indicative of an actual change in weight carried by the vehicle. A technical benefit may include that the disappearance of objects from the second camera's field of view provides a simple yet efficient way of confirming that objects have been unloaded from the vehicle. Such a disappearance from the field of view corresponds to a reduced weight carried by the vehicle. In this connection it should be pointed out that the exact weight in kg (or any other unit) does not need to be known, neither with respect to the expected change in weight nor with respect to actual change in weight. Rather, the expected change in weight may be of a qualitative nature. For instance, if a truck carries a number of boxes and each of them should be unloaded at a loading event, the expected change in weight corresponds to "weight of all boxes" whatever the exact quantitative value may be. If, on the other hand, only box numbers 1, 2, 3 and 4 should be unloaded at the present loading event (and box numbers 5, 6, 7 and 8 should be unloaded at a later loading event), then the expected change in weight at the present loading event corresponds to "weight of box numbers 1, 2, 3 and 4". When box numbers 1, 2, 3 and 4 disappear from the field of view of the second camera, then the actual change in weight is interpreted as reduction by the "weight of box numbers 1, 2, 3 and 4", i.e. the same as the expected change in weight. The second camera may, for instance, be a vehicle mounted camera, such as a bodybuilder camera having a field of view over the load carrying part of the vehicle. In other examples, it may be a different camera, for example an infrastructure camera, such as at a loading dock, facing towards the load carrying part of the vehicle.
Optionally in some examples, including in at least one preferred example, the processing circuitry may be configured to, based on one or more of the below listed occurrences, determine that the loading event has been completed:
   - the processing circuitry receiving information indicative of that the vehicle has moved a predetermined distance relative to the ground after the initiation of the loading event;
   - the processing circuitry receiving another captured image from the camera that captured the image of the identification code or from another camera, said other captured image being indicative of the loading event has been completed,
   - the processing circuitry receiving a command from a user operated input device, such as from a nomadic device, for example from a smartphone or portable computer,
   - the processing circuitry receiving information that a tipper body of the vehicle has been returned from a tilted position to a rest position.
A technical benefit, with respect to said receiving information indicative of that the vehicle has moved a predetermined distance, may include that it provides a simple confirmation that the loading event is completed, since the loading event normally takes place at a standstill. However, said predetermined distance may be set dependent on the type of vehicle and/or type of delivery. For instance, for a tipper truck delivering material such as gravel, sand, ground, concrete or similar, the truck may while tipping the material onto the ground move slowly forward during the unloading so as to spread the material on the ground. Thus, the predetermined distance in such cases would be set to be larger than a normal distance that is travelled during the tipping of the material.
A technical benefit, with respect to said receiving another captured image from the camera that captured the image of the identification code or from another camera, may include that when all goods have been unloaded, this can easily be detected by a camera and thus taken as an indication of the loading event having been completed.
A technical benefit, with respect to said receiving a command from a user operated input device, may include that it provides an additional level of security as a user can double-check that the loading event has indeed been completed before acknowledging that to the system. A technical benefit, with respect to said receiving information that a tipper body of the vehicle has been returned from a tilted position to a rest position, may include that once a tipper vehicle has unloaded its carried material, the tipper body of the vehicle is normally controlled to return to its rest position, which may thus conveniently be taken as an indication of a completed loading event.

Optionally in some examples, including in at least one preferred example, said receiving of the captured image of an identification code, in combination with said determining that the vehicle has come to a standstill, triggers the processing circuitry to receive said event data indicative of a change in weight carried or pulled by the vehicle. A technical benefit may include that such an automatic triggering of reception of event data is simple. When the driver has stopped the vehicle to have the identification code read by the camera, the loading event can then be regarded as initiated upon successful camera reading. Of course, it would be conceivable, in other examples, to let the driver send a command to the processing circuitry, as an additional verification of the loading event being initiated, in order to trigger the reception of event data. Such a command could, for example, be sent from a nomadic device such as a mobile phone or from a control panel in the driver's cabin, etc.

Optionally in some examples, including in at least one preferred example, the vehicle data may further comprise one or more of:
- a time stamp indicative of the time of the loading event, such as the time of initiation and/or completion of the loading event,
- positional coordinates, such as GPS coordinates, indicative of where the loading event has taken place,
- driver identification information, such as based on information from a tachograph card,
- vehicle camera images, such as bodybuilder camera images, for showing that loading/unloading has actually occurred,
- camera images of environment/surroundings around the vehicle, for showing location/conditions of the loading event.
A technical benefit of including one or more of the above listed points in the vehicle data is an increased level of assurance that a correct loading event has been performed, for example the right cargo been delivered to the right location and the right point in time. The examples of including camera images may be beneficial as supporting evidence of unloading/loading actually took place, in case of any dispute. The camera images may be still images or video images.

Optionally in some examples, including in at least one preferred example, the processing circuitry may be further configured to bundle the identification code and vehicle data into an encrypted and/or signed data package before transmitting them in the data package to the off-board server. A technical benefit may include increased level of assurance and/or security. For instance, SHA encryptions may be generated to prove the unicity and the uniqueness of the bundle. In that way, quality of the data that is shared may be appropriately secured.

Optionally in some examples, including in at least one preferred example, the processing circuitry may further be configured to
- control the issuance of a notification/alert, such as a visual or audible notification/alert, as a confirmation of the loading event having been initiated, and/or
- control the issuance of a notification/alert, such as a visual or audible notification/alert, as a confirmation of the loading event having been completed.
A technical benefit may include that the driver can get feedback with respect to proper functioning of the vehicle loading event confirmation system. Examples of notifications/alerts may for example include that processing circuitry may control the side direction indicators, such as control the side direction indicators to blink once, or to control a short horn activation, or to control some other visual or audible feedback through a graphical user interface, control panel, infotainment system, etc.

Optionally in some examples, including in at least one preferred example, the vehicle loading event confirmation system may further comprise said off-board server, wherein the off-board server is configured to receive a request of data from a requester, the request of data comprising information associated with the loading event. A technical benefit of incorporating the off-board server in the vehicle loading confirmation system may include that an increased assurance level is achievable.

Optionally in some examples, including in at least one preferred example, the off-board server may be configured to determine if the request of data is associated with said identification code and transmit said vehicle data to the requester when the request of data is associated with said identification code. A technical benefit may include an increased level of security, so as reduce the risk of the information being sent to an unauthorized requester. The requester may, for example, present the identification code as such to the off-board server, or the requester may, for example, present other data which may have been associated with the identification code when creating the identification code. Such other data may include order number, delivery address, company name, etc.

According to a second aspect of the disclosure, there is provided a vehicle, comprising:
- the vehicle loading event confirmation system of the first aspect, including any example thereof,
- a camera configured to provide to the processing circuitry said captured image of an identification code, and
- a sensor configured to detect a change in weight carried or pulled by the vehicle at the loading event and configured to provide to the processing circuitry said event data indicative of the change in weight. The second aspect of the disclosure may, similarly to the first aspect, seek to facilitate the confirmation of a loading event having taken place. The technical benefits of the second aspect may be largely analogous to those of the first aspect, including any example thereof.

According to a third aspect of the disclosure, there is provided a computer-implemented method, comprising:
- determining, by processing circuitry of a computer system, that a vehicle has come to a standstill,
- receiving, by the processing circuitry, from a camera associated with the vehicle, a captured image of an identification code, the identification code being external to the vehicle, wherein the identification code is associated with a predefined loading event at which the vehicle is planned to become loaded or unloaded, wherein successful completion of the predefined loading event is associated with an expected change in weight carried or pulled by the vehicle,
- receiving, by the processing circuitry, from a sensor of the vehicle, event data indicative of an actual change in weight carried or pulled by the vehicle at the loading event,
wherein, upon determination that the vehicle is at a standstill and upon receipt of the captured image and the event data,
- transmitting, by the processing circuitry, said identification code and vehicle data including said event data to an off-board server located remotely from the vehicle so as to allow the off-board server to provide information which enables a requester to determine whether or not the actual change in weight matches the expected change in weight.
The third aspect of the disclosure may, similarly to the first aspect, seek to facilitate the confirmation of a loading event having taken place. The technical benefits of the third aspect may be largely analogous to those of the first aspect, including any example thereof.

In the following, some examples of the method of the third aspect will be presented. The technical benefits of the examples are largely analogous to the technical benefits of corresponding examples above relating to the first aspect, and will therefore not be repeated here.

Optionally in some examples, including in at least one preferred example, the camera may be a vehicle mounted camera.

Optionally in some examples, including in at least one preferred example, the camera may have:
- a normal operating mode, in which it provides video representation of the environment, and
- a code reading mode, in which it is enabled to capture said image of an identification code, the method further comprising:
   upon determination by the processing circuitry that the vehicle has come to a standstill, controlling, by the processing circuitry, the camera to switch from the normal operating mode to the code reading mode.

Optionally in some examples, including in at least one preferred example, said identification code may be a QR code or a bar code.

Optionally in some examples, including in at least one preferred example, said sensor may be a load sensor and wherein said event data may include:
- a first load value sensed by the load sensor before the loading event is initiated, and
- a second load value representative of the load exerted on the vehicle at a time of determining by the processing circuitry that the loading event has been completed,
wherein said actual change in weight is determined from the difference between the first load value and the second load value.

Optionally in some examples, including in at least one preferred example, said sensor may be a trailer sensor configured to sense whether or not a trailer is connected to the vehicle, wherein said event data may include information indicative of the trailer having become disconnected from the vehicle and thus indicative of an actual change in weight pulled by the vehicle.

Optionally in some examples, including in at least one preferred example, said camera may be a first camera, wherein said sensor may form part of a second camera, wherein said event data may include information indicative of objects carried by the vehicle having disappeared from the second camera's field of view and thus indicative of an actual change in weight carried by the vehicle.

Optionally in some examples, including in at least one preferred example, the method may further comprise determining, by the processing circuitry, based on one or more of the below listed occurrences, that the loading event has been completed:
- the processing circuitry receiving information indicative of that the vehicle has moved a predetermined distance relative to the ground after the initiation of the loading event;
- the processing circuitry receiving another captured image from the camera that captured the image of the identification code or from another camera, said other captured image being indicative of the loading event has been completed,
- the processing circuitry receiving a command from a user operated input device, such as from a nomadic device, for example from a smartphone or portable computer,
- the processing circuitry receiving information that a tipper body of the vehicle has been returned from a tilted position to a rest position.

Optionally in some examples, including in at least one preferred example, said receiving of the captured image of an identification code, in combination with said determining that the vehicle has come to a standstill, may trigger the processing circuitry to receive said event data indicative of a change in weight carried or pulled by the vehicle.

Optionally in some examples, including in at least one preferred example, the vehicle data may further comprise one or more of:
- a time stamp indicative of the time of the loading event, such as the time of initiation and/or completion of the loading event,
- positional coordinates, such as GPS coordinates, indicative of where the loading event has taken place,
- driver identification information, such as based on information from a tachograph card,
- vehicle camera images, such as bodybuilder camera images, for showing that loading/unloading has actually occurred,
- camera images of environment/surroundings around the vehicle, for showing location/conditions of the loading event.

Optionally in some examples, including in at least one preferred example, the method may further comprise:
- bundling, by the processing circuitry, the identification code and vehicle data into an encrypted and/or signed data package before transmitting them in the data package to the off-board server.

Optionally in some examples, including in at least one preferred example, the method may further comprise:
- controlling, by the processing circuitry, the issuance of a notification/alert, such as a visual or audible notification/alert, as a confirmation of the loading event having been initiated, and/or
- controlling, by the processing circuitry, the issuance of a notification/alert, such as a visual or audible notification/alert, as a confirmation of the loading event having been completed.

According to a fourth aspect of the disclosure, there is provided a computer program product comprising program code for performing, when executed by the processing circuitry, the method of the third aspect, including any example thereof. The fourth aspect of the disclosure may, similarly to the first aspect, seek to facilitate the confirmation of a loading event having taken place. The technical benefits of the fourth aspect may be largely analogous to those of the first aspect, including any example thereof.

According to a fifth aspect of the disclosure, there is provided a non-transitory computer-readable storage medium comprising instructions, which when executed by the processing circuitry, cause the processing circuitry to perform the method of the third aspect, including any example thereof. The fifth aspect of the disclosure may, similarly to the first aspect, seek to facilitate the confirmation of a loading event having taken place. The technical benefits of the fifth aspect may be largely analogous to those of the first aspect, including any example thereof.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** illustrates schematically various examples of vehicles with respect to which the teachings of the present disclosure may be implemented.
**FIGS. 2A-2B** illustrate schematically two examples of a vehicle provided with mounted camera for implementing the teachings of the present disclosure.
**FIG. 3** illustrates schematically exemplary actions relating to a loading event in line with at least some examples of the present disclosure.
**FIG. 4** illustrates schematically a vehicle loading event confirmation system in accordance with at least some examples of the present disclosure.
**FIG. 5** illustrates schematically actions that may be taken when implementing the teachings of the present disclosure in accordance with at least some examples.
**FIG. 6** is another example, in the form of a block diagram, illustrating schematically a vehicle loading event confirmation system in accordance with at least some examples of the present disclosure.
**FIG. 7** is a flow chart of a computer-implemented method in accordance with at least some examples of the present disclosure.
**FIG. 8** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

In relation to loading events, when a vehicle is being loaded or unloaded, it is desirable to allow a requester (third-party) to get confirmation of the loading event having taken place as expected. Current solutions involve time-consuming paperwork or digital solutions for different service providers (e.g. requiring an app of the respective service providers to be installed on a driver's mobile phone). The vehicle loading event confirmation system of the present disclosure allows data to be provided to a requester, which data is associated with an event in which the vehicle has been loaded or unloaded. By enabling the requester to have access to such data, the requester may retrieve the data when the vehicle has delivered or picked-up goods and may verify a successful delivery or pick-up. According to the present disclosure, a camera associated with the vehicle is used for capturing an image of an identification code which is associated with the loading event. Whenever this is done, the system may push data, comprising the identification code and event data which is indicative of an actual change in weight due to the loading/unloading, to an off-board server, such as a cloud server. If the requester accesses the server and requests information about the loading event associated with said identification code, the requester can then compare the actual change in weight with an expected change in weight to determine if the loading event has been successful.

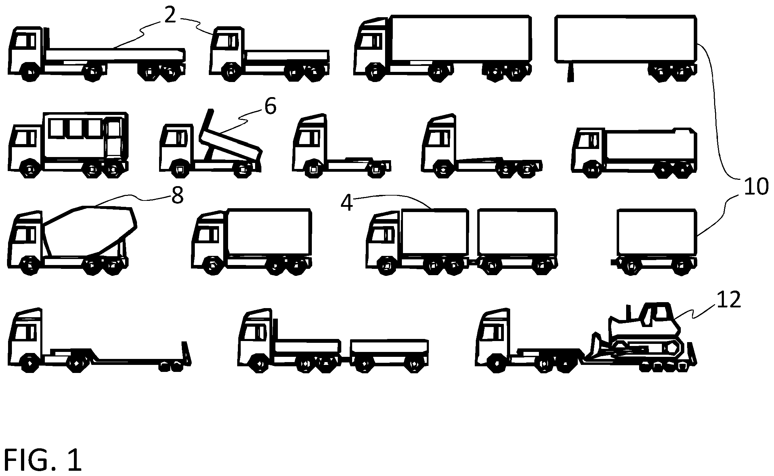

**FIG. 1** illustrates schematically various examples of vehicles with respect to which the teachings of the present disclosure may be implemented. For instance, the teachings of the disclosure may be implemented for flatbed vehicles **2;** for various vehicle combinations **4** in which a tractor is pulling one or more trailers; for tipper trucks **6,** for construction vehicles **8** such as concrete trucks, etc. Accordingly, a loading event may involve loading or unloading goods or material in various forms, such as packages, items, sand, gravel, concrete. A loading event may even include leaving an entire trailer **10** or a working machine **12** at a point of delivery. Thus, the actual change in weight occurring at a loading event, may be a change in weight carried by the vehicle (e.g. the weight of the material that is loaded or unloaded from the tipper body of a tipper truck **6)** or it may be a change in weight pulled by the vehicle (such as the weight of a trailer **10** including its content).

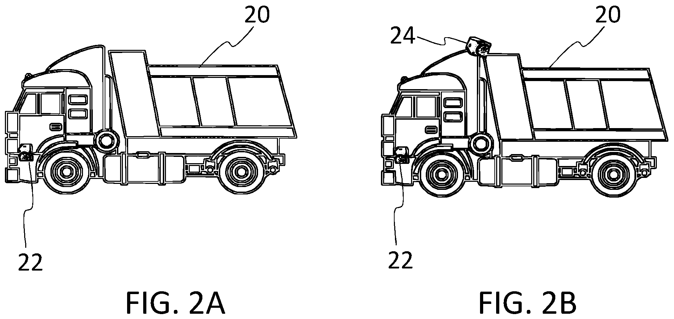

**FIGS. 2A-2B** illustrate schematically two examples of a vehicle **20** provided with a camera for implementing the teachings of the present disclosure. **FIG. 2A** illustrates a front corner camera **22** on the left side of the vehicle **20.** There may also be provided a front corner camera on the right side of the vehicle **20.** The camera **22** may be configured to capture an image of an identification code which is external to the vehicle **20.** The identification code may, for example, be a QR code or a barcode, however other codes such as series of letter, numbers, characters are also conceivable. The identification code is associated with a predefined loading event at which the vehicle **20** is planned to become loaded or unloaded. The identification code may be shown to the camera **22** from any suitable substrate, such as a piece of paper of from a screen (such as a screen of a mobile phone). For instance, when the driver has stopped the vehicle **20** in order to execute the loading event, he/she can hold the identification code in front of the camera **22** to allow it to capture the image.

The camera **22** may suitably have a normal operating mode, in which it provides video representation of the environment. In particular, the camera **22** can present a view to the driver which he/she cannot see from the driver's seat, thus reducing the risk for accidents. However, when the vehicle **20** has come to a standstill to start a loading event, the camera **22** may instead suitably be switched to a code reading mode in which it is enabled to capture said image of an identification code. Such switching may suitably be automatically executed, however, manually activated switching between the two modes is also conceivable.

**FIG. 2** **B** illustrates that the vehicle **20,** in addition to the front corner camera **22,** may be provided with a bodybuilder camera **24,** which may take images (still or video) of the cargo carried by the vehicle **20.** The images from such a bodybuilder camera **24** may advantageously be used for taking images which provides further evidence of what has actually been loaded or unloaded during a loading event. It should be understood that each one of the vehicles **20** in **FIGS 2A-2B** may be provided with more cameras in addition to those illustrated. Furthermore, the same principle of having one or more mounted cameras may be implemented for other vehicles, such as those illustrated in **FIG. 1****.**

In other examples, the camera which is used for capturing an image of an identification code, does not need to be a vehicle mounted camera. Instead, it may, for example, be provided in a nomadic device such as a mobile phone, which may be configured to communicate with processing circuitry of the vehicle loading event confirmation system of the present disclosure.

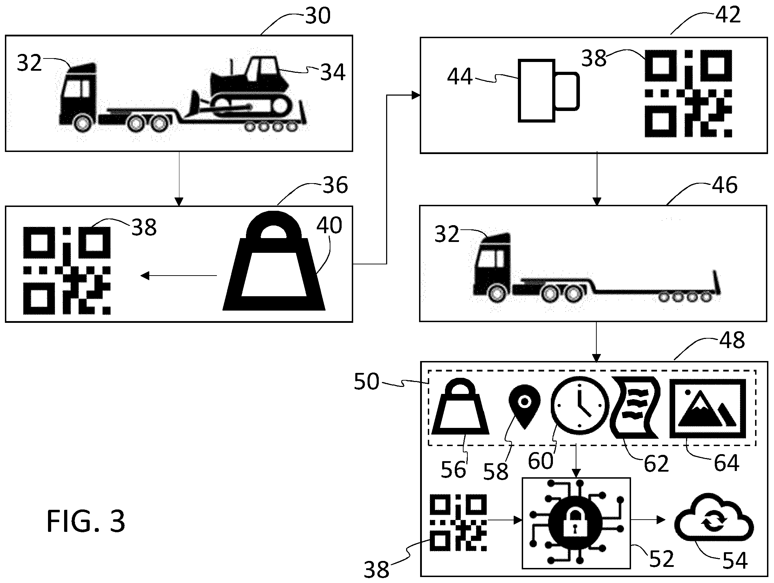

**FIG. 3** illustrates schematically exemplary actions relating to a loading event in line with at least some examples of the present disclosure, in particular a loading event for which the vehicle loading event confirmation system of the present disclosure may be implemented. In this example, different actions are shown in different diagrammatic boxes. The first box **30** symbolically illustrates that a vehicle **32** has been order to deliver a working machine **34.** Thus, for this particular example, the predefined loading event, may involve unloading the working machine **34** at a predetermined site of delivery. The second box **36** symbolically illustrates an identification code **38** (here in the form of a QR code) which is associated with the loading event. The association to the loading event may, for instance, be in the form of an association to a particular purchase order for the working machine **34,** to a date of delivery, to a place of delivery, to customer information, and/or service provider information, etc. The identification code **38** may suitably also be associated with an expected change in weight **40** carried or pulled by the vehicle **32.** In the present example, the expected change in weight **40** would be the weight of the working machine **34.**

The third box **42** schematically illustrates that, when the vehicle has arrived at the site of delivery and has come to a standstill, the identification code **38** is presented to a camera **44** associated with the vehicle. In line with previous explanations in this disclosure, the camera **44** may be a vehicle mounted camera or may be a separate camera, such as incorporated in a nomadic device. The camera **44** may capture an image of the identification code **38** and may present it to a processing circuitry of a vehicle loading event confirmation system of the present disclosure. The fourth box **46** symbolically illustrates that the working machine **34** has become unloaded from the vehicle **32,** thus completing the loading event. The fifth box **48** symbolically illustrates that upon completion of the loading event, the identification code **38** as well as vehicle data **50** may be bundled into an encrypted and/or signed data package **52** which is then transmitted to an off-board sever **54.** The vehicle data **50** includes event data which is indicative of the actual change in weight **56** that occurred during the loading event. The actual change in weight **56** may, in this example, for example be determined by a load sensor, which simply senses that the additional weight of the working machine **34** has been lost as a consequence of the loading event, or it may be determined by a camera (such as a bodybuilder camera) registering that the working machine **34** is no longer carried by the vehicle **32,** which is therefore indicative of a change in carried weight which corresponds to the weight of the working machine **34.** In this way, the off-board server **54** may provide information which enables a requester to determine whether or not the actual change in weight **56** matches the expected change in weight **40,** which may thus be taken as a confirmation of a successful completion of the loading event, i.e. in this case that the working machine **34** has been delivered. As further illustrated in the fifth box **48,** the vehicle data **50** may include additional information, such as positional coordinates **58** (e.g. GPS coordinates) indicative of where the loading event has taken place, a time stamp **60** indicative of the time of the loading event, driver identification information **62,** camera images **64** for showing the unloading actually occurred and/or for showing location/condition of the loading event. Such camera images **64** may suitably be taken by a different camera than the one used for capturing the image of the identification code **38** as the cameras may suitably be facing in different directions for their respective purpose (although using the same camera would also be conceivable).

In principle, the requester may be any party of interest. For instance, the requester may be a customer to whom the delivery is made, or it may be a seller hiring a delivery company, or it may be a back-office staff of the delivery company who wants to have confirmation of the delivery or pick-up associated with a particular loading event.

Furthermore, in order to be able to detect whether or not the vehicle data **50** has been tampered with or that the vehicle data **50** is corrupt, the vehicle data **50** may suitably be provided with a signature (e.g. checksum). The signature may for example be retrieved from running the vehicle data **50** through an algorithm. The requester requesting the data may also run the vehicle data **50** through the same algorithm and get the same signature, and if a different signature is output from the algorithm, then there is an indication that the data has been corrupted or tampered with.

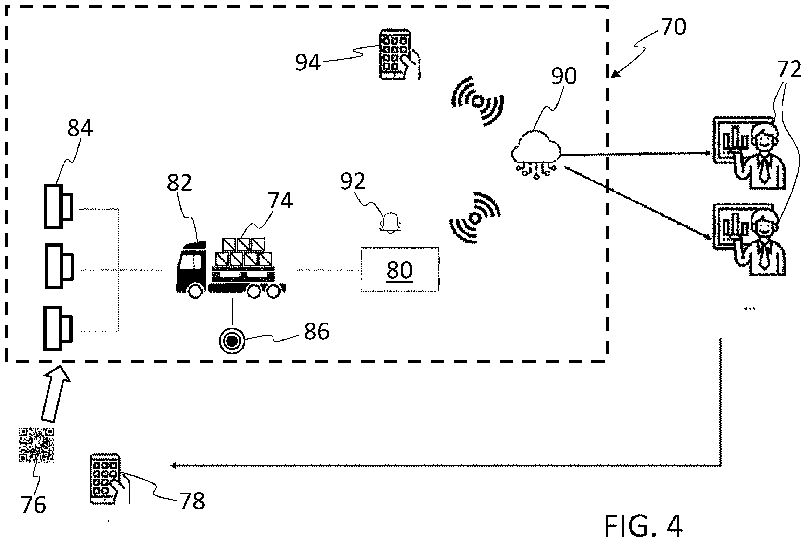

**FIG. 4** illustrates schematically a vehicle loading event confirmation system **70** in accordance with at least some examples of the present disclosure. Third parties **72,** such as a seller and a buyer may have agreed on a certain delivery of goods **74** by using a delivery company. The delivery may involve a loading event in the form of unloading the goods **74** at the buyer's location. Information identifying the loading event (such as the purchase order number, delivery location, etc.) may be associated to an identification code **76,** here illustrated as a QR code. When the delivery company receives the order from the seller, it may e.g. be via paper, or electronically via a text message or electronic mail to a mobile phone **78,** computer, etc. The delivery order from the seller may include the identification code **76,** which may suitably be forwarded to the driver's mobile phone or provided to the driver in printed paper form. The driver may then drive the goods **74** from the seller to the buyer to execute the delivery. Upon arrival at the buyer's location, the vehicle loading event confirmation system **70** of the present disclosure may become activated.

**FIG. 4** illustrates schematically that the vehicle loading event confirmation system **70** comprises processing circuitry **80.** In some examples, the processing circuitry **80** may be an integrated part of the vehicle **82** for which a loading event is to be performed. The processing circuitry **80** is configured to determine that the vehicle has come to a standstill. For example, the processing circuitry **80** may receive input from a speed sensor, input indicative of the vehicle being in neutral gear, and/or input indicative of the parking brake having been engaged, etc.

The processing circuitry **80** is configured to receive, from a camera **84** associated with the vehicle **82,** a captured image of the identification code **76.** As explained previously, the identification code **76** is external to the vehicle **82** and may suitably be presented to the camera **84** by the driver, for example by holding in front of the camera **84** the identification code **76** printed on a piece of paper or displayed in a mobile phone. In this example, three cameras **84** are illustrated, one or more of which may be used for capturing an image of the identification code **76.** In this example, the three cameras **84** may represent a front corner camera on the left side, a front corner camera on the right side, and a bodybuilder camera. However, one of the cameras **84** in **FIG. 4** could instead represent a camera which is not mounted to the vehicle, but which instead is part of a nomadic device which can communicate (e.g. wirelessly) with the processing circuitry **80.**
The processing circuitry **80** is further configured to receive, from a sensor **86** of the vehicle **82,** event data indicative of an actual change in weight carried or pulled by the vehicle **82** at the loading event. The sensor **86** may for example, be a load sensor, in which case the event data may include a first load value sensed by the load sensor before the loading event is initiated, and a second load value representative of the load exerted on the vehicle **82** at a time of determining by the processing circuitry **80** that the loading event has been completed. The actual change in weight is determined from the difference between the first load value and the second load value. In other examples, said sensor **86** may be a trailer sensor configured to sense whether or not a trailer is connected to the vehicle, wherein said event data may include information indicative of the trailer having become disconnected from the vehicle and thus indicative of an actual change in weight pulled by the vehicle. In still further examples, said sensor **86** may form part of one of said cameras **84,** wherein said event data may include information indicative of objects (goods **74)** carried by the vehicle **82** having disappeared from that camera's field of view and thus indicative of an actual change in weight carried by the vehicle.

Upon determination that the vehicle **82** is at a standstill, and upon receipt of the captured image and the event data, the processing circuitry **80** is further configured to transmit said identification code **76** and also vehicle date including said event data to an off-board server **90** located remotely from the vehicle **82.** Such a transmission may suitably be via a telematic gateway. The processing circuitry **80** may suitably be configured to determine that the loading event has been completed (and thus that event data is ready to be provided to the off-board server **90)** based on any appropriate detectable occurrence. For instance, the processing circuitry **80** may receive information indicative of that the vehicle **82** has moved a predetermined distance relative to the ground after the initiation of the loading event, and is thus no longer at a standstill. Another example may be that the processing circuitry **80** may receive another captured image from the camera **84** that captured the image of the identification code **76** or from another camera **84,** said other captured image being indicative of the loading event has been completed (for example, a cargo compartment, a flatbed, a tipper body, etc. has been emptied). Yet another example may be that the processing circuitry **80** may receive a command from a user operated input device, such as from a nomadic device, for example from a smartphone or portable computer. A still further example may be that the processing circuitry **80** may receiving information that a tipper body of the vehicle has been returned from a tilted position to a rest position.

The processing circuitry **80** may further be configured to control the issuance of a notification/alert **92,** such as a visual or audible notification/alert, as a confirmation of the loading event having been initiated and/or that it has been completed.

In the present example the vehicle loading event confirmation system **70** comprises said off-board server **90,** although in other examples the off-board server **90** does not need to be part of the actual vehicle loading event confirmation system **70.** A requester (third party **72),** such as the seller and/or buyer in this example, may access the off-boarder server **90** to obtain information which enables the requester to determine whether or not the actual change in weight matches the expected change in weight. The requester knows the expected change in weight, i.e. in this example the weight of the goods **74** that were to be delivered to the buyer's location. The requester may, e.g. send an image of the identification code **76,** or in some other way indicate which loading event that the requester desires to get information about. The off-board server **90** may thus be configured to receive a request of data from the requesters, wherein the request of data comprises information associated with the loading event. The off-board server **90** may further be configured to determine with which identification code **76** the request of data is associated, and transmit the relevant vehicle data to the requester. Since the vehicle data includes the event data which in turn includes information about the actual change in weight that occurred at the loading event, the requester can now compare the actual change in weight with the expected change in weight. Thus, the requester can get a confirmation that all goods **74** were unloaded from (or in other examples loaded onto) the vehicle **82.** In examples in which the vehicle data comprises further supporting data, such as positional data, images of the delivery location, time stamp, etc. further assurance may be provided to the requester, such as assurance that the delivery was made to the right location and/or at the right time.

In other examples, the processing circuitry **94** may be part of a nomadic device such a mobile phone which may communicates wirelessly with other parts of the vehicle loading event confirmation system **70,** such as communicating wirelessly with the loading sensor **86,** and with the off-board server **90.**

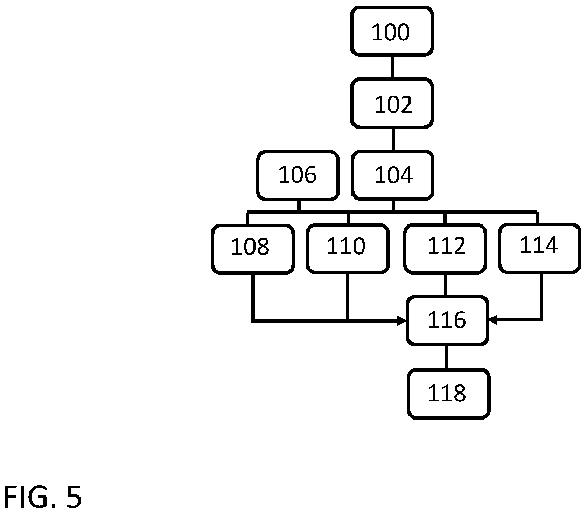

**FIG. 5** illustrates schematically actions that may be taken when implementing the teachings of the present disclosure in accordance with at least some examples. In block **100** one or more vehicle mounted cameras may be provided as identification code readers, such as QR code readers to support deliveries digitalization. In block **102,** when the processing circuitry detects that the vehicle is in a parked condition (e.g. parking brake applied and gear box in neutral), the code reading mode of the camera may be activated. In block **104,** a third party identification code may be presented to the camera which thus detects the identification code and provides a captured image thereof to the processing circuitry. Suitably, the camera may be at a front passenger side or driver's side. Instead of using a vehicle mounted camera as a code reader, a nomadic device such as a mobile phone may be used as a code reader, as represented by block **106.** In either case, the reading of the identification code may trigger various actions to be performed to register the loading event. For instance, in block **108** a picture recording of a bodybuilder camera may be triggered to provide evidence of a loading event indeed taking place. In block **110** a GPS position recording may become triggered to provide evidence of the location of the loading event. In block **112** an indicator light may be triggered to blink or the horn may be triggered to sound as a confirmation to the driver that the registering of the loading event has started. In block **114** a weight difference recording may be triggered to register the change in weight occurring due to the loading event. The various triggered and recorded/registered data may be pushed via the telematic gateway to an off-board server such as a cloud server, as represented by block **116.** As further represented by block **118** examples of information available in the cloud may then, for example, include the triggering code image, a time stamp, an encrypted signed key, GPS position, actual change in weight, bodybuilder camera picture.

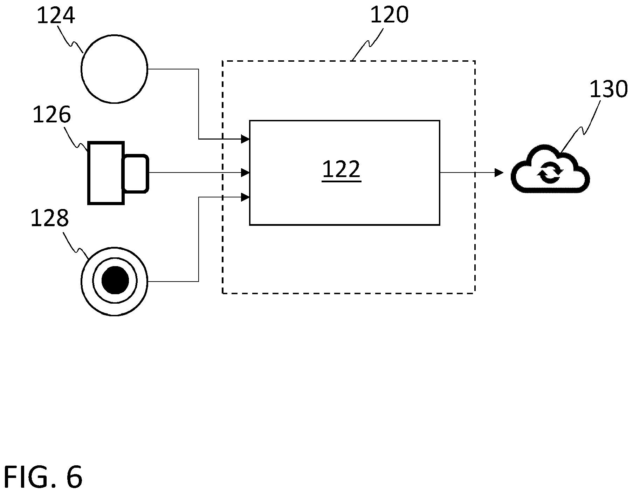

**FIG. 6** is another example, in the form of a block diagram, illustrating schematically a vehicle loading event confirmation system **120** in accordance with at least some examples of the present disclosure. The vehicle loading event confirmation system comprises processing circuitry **122** configured to:
- determine that a vehicle has come to a standstill (e.g from one or more input devices **124,** indicative of for example parking brake applied),
- receive, from a camera **126** associated with the vehicle, a captured image of an identification code, the identification code being external to the vehicle, wherein the identification code is associated with a predefined loading event at which the vehicle is planned to become loaded or unloaded, wherein successful completion of the predefined loading event is associated with an expected change in weight carried or pulled by the vehicle,
- receive, from a sensor **128** of the vehicle, event data indicative of an actual change in weight carried or pulled by the vehicle at the loading event,
wherein, upon determination that the vehicle is at a standstill and upon receipt of the captured image and the event data, the processing circuitry **122** is further configured to:
- transmit said identification code and vehicle data including said event data to an off-board server **130** located remotely from the vehicle so as to allow the off-board server **130** to provide information which enables a requester to determine whether or not the actual change in weight matches the expected change in weight.

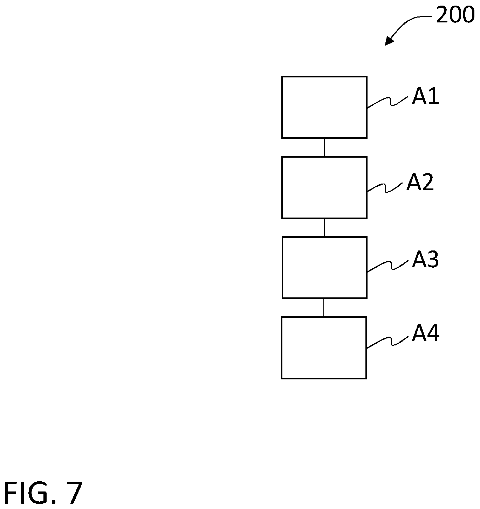

**FIG. 7** is a flow chart of a computer-implemented method **200** in accordance with at least some examples of the present disclosure. The method **200** comprises the following actions:
- in action **A1,** determining, by processing circuitry of a computer system, that a vehicle has come to a standstill,
- in action **A2,** receiving, by the processing circuitry, from a camera associated with the vehicle, a captured image of an identification code, the identification code being external to the vehicle, wherein the identification code is associated with a predefined loading event at which the vehicle is planned to become loaded or unloaded, wherein successful completion of the predefined loading event is associated with an expected change in weight carried or pulled by the vehicle,
- in action **A3,** receiving, by the processing circuitry, from a sensor of the vehicle, event data indicative of an actual change in weight carried or pulled by the vehicle at the loading event, wherein, upon determination that the vehicle is at a standstill and upon receipt of the captured image and the event data,
- in action **A4,** transmitting, by the processing circuitry, said identification code and vehicle data including said event data to an off-board server located remotely from the vehicle so as to allow the off-board server to provide information which enables a requester to determine whether or not the actual change in weight matches the expected change in weight.

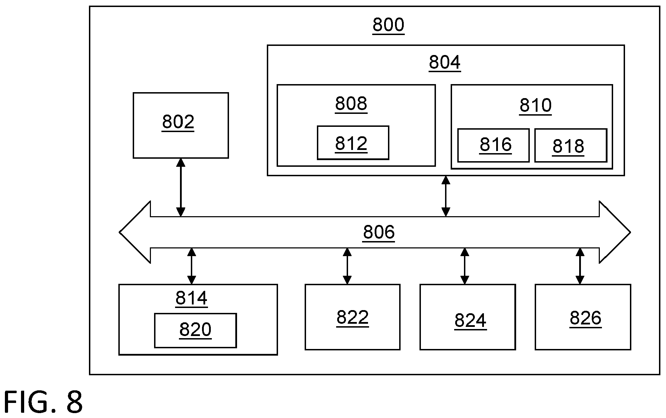

**FIG. 8** is a schematic diagram of an exemplary computer system **800** for implementing examples disclosed herein, according to an example. The computer system **800** is adapted to execute instructions from a computer-readable medium to perform these and/or any of the functions or processing described herein. The computer system **800** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **800** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **800** may comprise at least one computing device or electronic device capable of including firmware, hardware, and/or executing software instructions to implement the functionality described herein. The computer system **800** may include processing circuitry **802** (e.g., processing circuitry including one or more processor devices or control units), a memory **804,** and a system bus **806.** The computer system **800** may include at least one computing device having the processing circuitry **802.** The system bus **806** provides an interface for system components including, but not limited to, the memory **804** and the processing circuitry **802.** The processing circuitry **802** may include any number of hardware components for conducting data or signal processing or for executing computer code stored in memory **804.** The processing circuitry **802** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **802** may further include computer executable code that controls operation of the programmable device.

The system bus **806** may be any of several types of bus structures that may further interconnect to a memory bus (with or without a memory controller), a peripheral bus, and/or a local bus using any of a variety of bus architectures. The memory **804** may be one or more devices for storing data and/or computer code for completing or facilitating methods described herein. The memory **804** may include database components, object code components, script components, or other types of information structure for supporting the various activities herein. Any distributed or local memory device may be utilized with the systems and methods of this description. The memory **804** may be communicably connected to the processing circuitry **802** (e.g., via a circuit or any other wired, wireless, or network connection) and may include computer code for executing one or more processes described herein. The memory **804** may include non-volatile memory **808** (e.g., read-only memory (ROM), erasable programmable read-only memory (EPROM), electrically erasable programmable read-only memory (EEPROM), etc.), and volatile memory **810** (e.g., random-access memory (RAM)), or any other medium which can be used to carry or store desired program code in the form of machine-executable instructions or data structures and which can be accessed by a computer or other machine with processing circuitry **802.** A basic input/output system (BIOS) **812** may be stored in the non-volatile memory **808** and can include the basic routines that help to transfer information between elements within the computer system **800.**

The computer system **800** may further include or be coupled to a non-transitory computer-readable storage medium such as the storage device **814,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **814** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **814** and/or in the volatile memory **810,** which may include an operating system **816** and/or one or more program modules **818.** All or a portion of the examples disclosed herein may be implemented as a computer program **820** stored on a transitory or non-transitory computer-usable or computer-readable storage medium (e.g., single medium or multiple media), such as the storage device **814,** which includes complex programming instructions (e.g., complex computer-readable program code) to cause the processing circuitry **802** to carry out actions described herein. Thus, the computer-readable program code of the computer program **820** can comprise software instructions for implementing the functionality of the examples described herein when executed by the processing circuitry **802.** In some examples, the storage device **814** may be a computer program product (e.g., readable storage medium) storing the computer program **820** thereon, where at least a portion of a computer program **820** may be loadable (e.g., into a processor) for implementing the functionality of the examples described herein when executed by the processing circuitry **802.** The processing circuitry **802** may serve as a controller or control system for the computer system **800** that is to implement the functionality described herein.

The computer system **800** may include an input device interface **822** configured to receive input and selections to be communicated to the computer system **800** when executing instructions, such as from a keyboard, mouse, touch-sensitive surface, etc. Such input devices may be connected to the processing circuitry **802** through the input device
interface **822** coupled to the system bus **806** but can be connected through other interfaces, such as a parallel port, an Institute of Electrical and Electronic Engineers (IEEE) 1394 serial port, a Universal Serial Bus (USB) port, an IR interface, and the like. The computer system **800** may include an output device interface **824** configured to forward output, such as to a display, a video display unit (e.g., a liquid crystal display (LCD) or a cathode ray tube (CRT)). The computer system **800** may include a communications interface **826** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

**Example 1:** A vehicle loading event confirmation system comprising processing circuitry configured to:
- determine that a vehicle has come to a standstill,
- receive, from a camera associated with the vehicle, a captured image of an identification code, the identification code being external to the vehicle, wherein the identification code is associated with a predefined loading event at which the vehicle is planned to become loaded or unloaded, wherein successful completion of the predefined loading event is associated with an expected change in weight carried or pulled by the vehicle,
- receive, from a sensor of the vehicle, event data indicative of an actual change in weight carried or pulled by the vehicle at the loading event,
wherein, upon determination that the vehicle is at a standstill and upon receipt of the captured image and the event data, the processing circuitry is further configured to:
- transmit said identification code and vehicle data including said event data to an off-board server located remotely from the vehicle so as to allow the off-board server to provide information which enables a requester to determine whether or not the actual change in weight matches the expected change in weight.

**Example 2:** The vehicle loading event confirmation system of **example 1,** wherein the camera is a vehicle mounted camera.

**Example 3:** The vehicle loading event confirmation system of any one of **examples 1-2,** further comprising said camera, wherein the camera has:
- a normal operating mode, in which it provides video representation of the environment, and
- a code reading mode, in which it is enabled to capture said image of an identification code, wherein, upon determination by the processing circuitry that the vehicle has come to a standstill, the processing circuitry is configured to control the camera to switch from the normal operating mode to the code reading mode.

**Example 4:** The vehicle loading event confirmation system of any one of examples 1-3, wherein said identification code is a QR code or a bar code.

**Example** 5: The vehicle loading event confirmation system of any one of **examples 1-4,** wherein said sensor is a load sensor and wherein said event data includes:
- a first load value sensed by the load sensor before the loading event is initiated, and
- a second load value representative of the load exerted on the vehicle at a time of determining by the processing circuitry that the loading event has been completed,
wherein said actual change in weight is determined from the difference between the first load value and the second load value.

**Example 6:** The vehicle loading event confirmation system of any of **examples 1-4,** wherein said sensor is a trailer sensor configured to sense whether or not a trailer is connected to the vehicle, wherein said event data includes information indicative of the trailer having become disconnected from the vehicle and thus indicative of an actual change in weight pulled by the vehicle.

**Example 7:** The vehicle loading event confirmation system of any of **examples 1-4,** wherein said camera is a first camera, wherein said sensor forms part of a second camera, wherein said event data includes information indicative of objects carried by the vehicle having disappeared from the second camera's field of view and thus indicative of an actual change in weight carried by the vehicle.

**Example 8:** The vehicle loading event confirmation system of any one of **examples 1-7,** wherein the processing circuitry is configured to, based on one or more of the below listed occurrences, determine that the loading event has been completed:
- the processing circuitry receiving information indicative of that the vehicle has moved a predetermined distance relative to the ground after the initiation of the loading event;
- the processing circuitry receiving another captured image from the camera that captured the image of the identification code or from another camera, said other captured image being indicative of the loading event has been completed,
- the processing circuitry receiving a command from a user operated input device, such as from a nomadic device, for example from a smartphone or portable computer,
- the processing circuitry receiving information that a tipper body of the vehicle has been returned from a tilted position to a rest position.

**Example 9:** The vehicle loading event confirmation system of any one of **examples 1-8,** wherein said receiving of the captured image of an identification code, in combination with said determining that the vehicle has come to a standstill, triggers the processing circuitry to receive said event data indicative of a change in weight carried or pulled by the vehicle.

**Example 10:** The vehicle loading event confirmation system of any one of **examples 1-9,** wherein the vehicle data further comprises one or more of:
- a time stamp indicative of the time of the loading event, such as the time of initiation and/or completion of the loading event,
- positional coordinates, such as GPS coordinates, indicative of where the loading event has taken place,
- driver identification information, such as based on information from a tachograph card,
- vehicle camera images, such as bodybuilder camera images, for showing that loading/unloading has actually occurred,
- camera images of environment/surroundings around the vehicle, for showing location/conditions of the loading event.

**Example 11:** The vehicle loading event confirmation system of any one of **examples 1-10,** wherein the processing circuitry is further configured to bundle the identification code and vehicle data into an encrypted and/or signed data package before transmitting them in the data package to the off-board server.

**Example 12:** The vehicle loading event confirmation system of any one of **examples 1-11,** wherein the processing circuitry is further configured to
- control the issuance of a notification/alert, such as a visual or audible notification/alert, as a confirmation of the loading event having been initiated, and/or
- control the issuance of a notification/alert, such as a visual or audible notification/alert, as a confirmation of the loading event having been completed.

**Example 13:** The vehicle loading event confirmation system of any one of **examples 1-12,** further comprising said off-board server, wherein the off-board server is configured to receive a request of data from a requester, the request of data comprising information associated with the loading event.

**Example 14:** The vehicle loading event confirmation system of **example 13,** wherein the off-board server is configured to determine if the request of data is associated with said identification code and transmit said vehicle data to the requester when the request of data is associated with said identification code.

**Example 15:** A vehicle, comprising:
- the vehicle loading event confirmation system of any one of **examples 1-12,**
- a camera configured to provide to the processing circuitry said captured image of an identification code, and
- a sensor configured to detect a change in weight carried or pulled by the vehicle at the loading event and configured to provide to the processing circuitry said event data indicative of the change in weight.

**Example 16:** A computer-implemented method, comprising:
- determining, by processing circuitry of a computer system, that a vehicle has come to a standstill,
- receiving, by the processing circuitry, from a camera associated with the vehicle, a captured image of an identification code, the identification code being external to the vehicle, wherein the identification code is associated with a predefined loading event at which the vehicle is planned to become loaded or unloaded, wherein successful completion of the predefined loading event is associated with an expected change in weight carried or pulled by the vehicle,
- receiving, by the processing circuitry, from a sensor of the vehicle, event data indicative of an actual change in weight carried or pulled by the vehicle at the loading event,
wherein, upon determination that the vehicle is at a standstill and upon receipt of the captured image and the event data,
- transmitting, by the processing circuitry, said identification code and vehicle data including said event data to an off-board server located remotely from the vehicle so as to allow the off-board server to provide information which enables a requester to determine whether or not the actual change in weight matches the expected change in weight.

**Example 17:** The method of **example 16,** wherein the camera is a vehicle mounted camera.

**Example 18:** The method of any one of **examples 16-17,** wherein the camera has:
- a normal operating mode, in which it provides video representation of the environment, and
- a code reading mode, in which it is enabled to capture said image of an identification code, the method further comprising:
   upon determination by the processing circuitry that the vehicle has come to a standstill, controlling, by the processing circuitry, the camera to switch from the normal operating mode to the code reading mode.

**Example 19:** The method of any one of examples **16-18,** wherein said identification code is a QR code or a bar code.

**Example 20:** The method of any one of **examples 16-19,** wherein said sensor is a load sensor and wherein said event data includes:
- a first load value sensed by the load sensor before the loading event is initiated and
- a second load value representative of the load exerted on the vehicle at a time of determining by the processing circuitry that the loading event has been completed,
wherein said actual change in weight is determined from the difference between the first load value and the second load value.

**Example 21:** The method of any of **examples 16-19,** wherein said sensor is a trailer sensor configured to sense whether or not a trailer is connected to the vehicle, wherein said event data includes information indicative of the trailer having become disconnected from the vehicle and thus indicative of an actual change in weight pulled by the vehicle.

**Example 22:** The method of any of **examples 16-19,** wherein said camera is a first camera, wherein said sensor forms part of a second camera, wherein said event data includes information indicative of objects carried by the vehicle having disappeared from the second camera's field of view and thus indicative of an actual change in weight carried by the vehicle.

**Example 23:** The method of any one of **examples 16-22,** further comprising determining, by the processing circuitry, based on one or more of the below listed occurrences, that the loading event has been completed:
- the processing circuitry receiving information indicative of that the vehicle has moved a predetermined distance relative to the ground after the initiation of the loading event;
- the processing circuitry receiving another captured image from the camera that captured the image of the identification code or from another camera, said other captured image being indicative of the loading event has been completed,
- the processing circuitry receiving a command from a user operated input device, such as from a nomadic device, for example from a smartphone or portable computer,
- the processing circuitry receiving information that a tipper body of the vehicle has been returned from a tilted position to a rest position.

**Example 24:** The method of any one of **examples 16-23,** wherein said receiving of the captured image of an identification code, in combination with said determining that the vehicle has come to a standstill, triggers the processing circuitry to receive said event data indicative of a change in weight carried or pulled by the vehicle.

**Example 25:** The method of any one of **examples 16-24,** wherein the vehicle data further comprises one or more of:
- a time stamp indicative of the time of the loading event, such as the time of initiation and/or completion of the loading event,
- positional coordinates, such as GPS coordinates, indicative of where the loading event has taken place,
- driver identification information, such as based on information from a tachograph card,
- vehicle camera images, such as bodybuilder camera images, for showing that loading/unloading has actually occurred,
- camera images of environment/surroundings around the vehicle, for showing location/conditions of the loading event.

**Example 26:** The method of any one of **examples 16-25,** further comprising:
- bundling, by the processing circuitry, the identification code and vehicle data into an encrypted and/or signed data package before transmitting them in the data package to the off-board server.

**Example 27:** The method of any one of **examples 16-26,** further comprising:
- controlling, by the processing circuitry, the issuance of a notification/alert, such as a visual or audible notification/alert, as a confirmation of the loading event having been initiated, and/or
- controlling, by the processing circuitry, the issuance of a notification/alert, such as a visual or audible notification/alert, as a confirmation of the loading event having been completed.

**Example 28:** A computer program product comprising program code for performing, when executed by the processing circuitry, the method of any of **examples 16-27.**

**Example 29:** A non-transitory computer-readable storage medium comprising instructions, which when executed by the processing circuitry, cause the processing circuitry to perform the method of any of **examples 16-27.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A vehicle loading event confirmation system comprising processing circuitry configured to:
- determine that a vehicle has come to a standstill,
- receive, from a camera associated with the vehicle, a captured image of an identification code, the identification code being external to the vehicle, wherein the identification code is associated with a predefined loading event at which the vehicle is planned to become loaded or unloaded, wherein successful completion of the predefined loading event is associated with an expected change in weight carried or pulled by the vehicle,
- receive, from a sensor of the vehicle, event data indicative of an actual change in weight carried or pulled by the vehicle at the loading event,
wherein, upon determination that the vehicle is at a standstill and upon receipt of the captured image and the event data, the processing circuitry is further configured to:
- transmit said identification code and vehicle data including said event data to an off-board server located remotely from the vehicle so as to allow the off-board server to provide information which enables a requester to determine whether or not the actual change in weight matches the expected change in weight.

2. The vehicle loading event confirmation system of claim 1, wherein the camera is a vehicle mounted camera.

3. The vehicle loading event confirmation system of any one of claims 1-2, further comprising said camera, wherein the camera has:
- a normal operating mode, in which it provides video representation of the environment, and
- a code reading mode, in which it is enabled to capture said image of an identification code, wherein, upon determination by the processing circuitry that the vehicle has come to a standstill, the processing circuitry is configured to control the camera to switch from the normal operating mode to the code reading mode.

4. The vehicle loading event confirmation system of any one of claims 1-3, wherein said identification code is a QR code or a bar code.

5. The vehicle loading event confirmation system of any one of claims 1-4, wherein said sensor is a load sensor and wherein said event data includes:
- a first load value sensed by the load sensor before the loading event is initiated, and
- a second load value representative of the load exerted on the vehicle at a time of determining by the processing circuitry that the loading event has been completed,
wherein said actual change in weight is determined from the difference between the first load value and the second load value.

6. The vehicle loading event confirmation system of any of claims 1-4, wherein said sensor is a trailer sensor configured to sense whether or not a trailer is connected to the vehicle, wherein said event data includes information indicative of the trailer having become disconnected from the vehicle and thus indicative of an actual change in weight pulled by the vehicle.

7. The vehicle loading event confirmation system of any of claims 1-4, wherein said camera is a first camera, wherein said sensor forms part of a second camera, wherein said event data includes information indicative of objects carried by the vehicle having disappeared from the second camera's field of view and thus indicative of an actual change in weight carried by the vehicle.

8. The vehicle loading event confirmation system of any one of claims 1-7, wherein the processing circuitry is configured to, based on one or more of the below listed occurrences, determine that the loading event has been completed:
- the processing circuitry receiving information indicative of that the vehicle has moved a predetermined distance relative to the ground after the initiation of the loading event;
- the processing circuitry receiving another captured image from the camera that captured the image of the identification code or from another camera, said other captured image being indicative of the loading event has been completed,
- the processing circuitry receiving a command from a user operated input device, such as from a nomadic device, for example from a smartphone or portable computer,
- the processing circuitry receiving information that a tipper body of the vehicle has been returned from a tilted position to a rest position.

9. The vehicle loading event confirmation system of any one of claims 1-8, wherein said receiving of the captured image of an identification code, in combination with said determining that the vehicle has come to a standstill, triggers the processing circuitry to receive said event data indicative of a change in weight carried or pulled by the vehicle.

10. The vehicle loading event confirmation system of any one of claims 1-9, wherein the vehicle data further comprises one or more of:
- a time stamp indicative of the time of the loading event, such as the time of initiation and/or completion of the loading event,
- positional coordinates, such as GPS coordinates, indicative of where the loading event has taken place,
- driver identification information, such as based on information from a tachograph card,
- vehicle camera images, such as bodybuilder camera images, for showing that loading/unloading has actually occurred,
- camera images of environment/surroundings around the vehicle, for showing location/conditions of the loading event.

11. The vehicle loading event confirmation system of any one of claims 1-10, wherein the processing circuitry is further configured to bundle the identification code and vehicle data into an encrypted and/or signed data package before transmitting them in the data package to the off-board server.

12. The vehicle loading event confirmation system of any one of claims 1-11, wherein the processing circuitry is further configured to
- control the issuance of a notification/alert, such as a visual or audible notification/alert, as a confirmation of the loading event having been initiated, and/or
- control the issuance of a notification/alert, such as a visual or audible notification/alert, as a confirmation of the loading event having been completed.

13. The vehicle loading event confirmation system of any one of claims 1-12, further comprising said off-board server, wherein the off-board server is configured to receive a request of data from a requester, the request of data comprising information associated with the loading event, wherein, optionally, the off-board server is configured to determine if the request of data is associated with said identification code and transmit said vehicle data to the requester when the request of data is associated with said identification code.

14. A vehicle, comprising:
- the vehicle loading event confirmation system of any one of claims 1-12,
- a camera configured to provide to the processing circuitry said captured image of an identification code, and
- a sensor configured to detect a change in weight carried or pulled by the vehicle at the loading event and configured to provide to the processing circuitry said event data indicative of the change in weight.

15. A computer-implemented method, comprising:
- determining, by processing circuitry of a computer system, that a vehicle has come to a standstill,
- receiving, by the processing circuitry, from a camera associated with the vehicle, a captured image of an identification code, the identification code being external to the vehicle, wherein the identification code is associated with a predefined loading event at which the vehicle is planned to become loaded or unloaded, wherein successful completion of the predefined loading event is associated with an expected change in weight carried or pulled by the vehicle,
- receiving, by the processing circuitry, from a sensor of the vehicle, event data indicative of an actual change in weight carried or pulled by the vehicle at the loading event,
wherein, upon determination that the vehicle is at a standstill and upon receipt of the captured image and the event data,
- transmitting, by the processing circuitry, said identification code and vehicle data including said event data to an off-board server located remotely from the vehicle so as to allow the off-board server to provide information which enables a requester to determine whether or not the actual change in weight matches the expected change in weight.

16. A computer program product comprising program code for performing, when executed by the processing circuitry, the method of claim 15.

17. A non-transitory computer-readable storage medium comprising instructions, which when executed by the processing circuitry, cause the processing circuitry to perform the method of claims 15.
